# EUROPEAN PATENT SPECIFICATION

(11) **EP 2 937 557 B1**
(45) Date of publication and mention of the grant of the patent: **15.11.2017**
(21) Application number: 14854901.7
(22) Date of filing: 30.04.2014
(51) Int. Cl.: F03D 1/06

(54) **WIND WHEEL (WITH TWO ALTERNATIVES)**
WINDRAD (MIT ZWEI ALTERNATIVEN)
ROUE ÉOLIENNE (EN DEUX VARIANTES)

(30) Priority: 20.05.2013 KZ 20130673; 17.05.2013 KZ 20130652; 12.07.2013 KZ 20130932
(43) Date of publication of application: 28.10.2015
(73) Proprietor: Shaikenov, Blok, 050012 Almaty city (KZ); Shaikenov, Yerzhan Blokovich, 050012 Almaty city, (KZ)
(72) Inventor: Shaikenov, Blok, 050012 Almaty city (KZ); Shaikenov, Yerzhan Blokovich, 050012 Almaty city, (KZ)
(74) Representative: Kastel, Stefan
(86) International application number: PCT/KZ2014/000004
(87) International publication number: WO 2014/185758

(56) References cited:
- WO-A1-2007/116231
- WO-A2-2008/064678
- DE-A1- 19 963 252
- FR-A1- 2 863 318
- GE-B- P20 084 319
- SU-A1- 1 457
- SU-A1- 2 496

## Description

### Summary

The present invention relates to wind energy field, specifically, belongs to the use of wind wheel for generation of energy in horizontal axis wind turbines.

Technical result of the invention is amplification of efficiency coefficient of using open airflow due to special design structure of the wind wheel, as well as achieving a considerable reduction in material consumption and weight of a wind turbine.

This is achieved through the use of a blade in a form of an ice-hockey stick in the new wind wheel (rotor) design structure in order to effectively use open airflow, and said blade consist of two parts: a short root and a long wing part. Said short root part is made of high-quality steel and consists of axial and sleeve sections. Said short root part of the blade, either on a distance of 1.5-4.5 m (Wind wheel 1), or on a distance of 20-25 cm (Wind wheel 2) from its junction to the hub of the wind turbine, has an elbow bend of 30-45° relative the primary axis of attachment. Said elbow bend is reversed, contrary to the rotation of the blades. Said axial section of the short root part of the blade is attached to the hub of the wind turbine. Said long wing part is connected to the said sleeve section of the short root part of the blade. In order to prevent wreckage on said blade's bend in case of strong wind, there is an additional steel reinforcement at the junction of the bend on axial and sleeve sections. Said axial and sleeve sections are then tightened by steel wire in order to reduce the load on said elbow bend.

The invented design structure applies a principle of a lever with two points of effort application on one side, where the long wing part of the blade acts as a lever arm on the fulcrum, i.e. the elbow bend and creates an additional force effect on rotational element-the main drive shaft, creating an opportunity to generate more energy from the wind.

### Description

The invention is related to wind energy, in particular, to the use of wind for energy generation in horizontal axis wind turbines of small, medium and large capacity using a three-blade wind wheel (rotor). The main elements of the wind turbine, converting kinetic energy of the wind stream, come from structural design features of the wind wheel.

In modern wind turbines, aerodynamic wind load for rotational propulsion is carried by wing shaped blades tapering at the blade tip. Open airflow encounters significant resistance, attacking the blade's surface and shifting sidewise, and creates a growing pressure, which is stronger at the blade tip. The longer is the wing part of the blade, the stronger is the kinetic energy created by the wind stream. This is why the blade's length is increased in order to improve the capacity of wind turbines. This causes a range of interconnected problems, such as a problem of securing robustness of all parts of a wind turbine. In addition, it requires increasing the mass of the tower, wind wheel (rotor), nacelle, and the use of special heavy equipment for installation of a wind turbine and its regular maintenance. As a result, there is an escalation in cost of a wind turbine construction and subsequently, cost of the generated energy.

There exists a wind wheel in a horizontal axis wind turbine (EP 1923 567 A2, dated 21.05.2008, F03D 1/06), characterized by a blade root tilted windward at an 8-10° angle in the vertical plane, to the effect that the structural integrity of blade tips is preserved in the event of any physical contact with the tower resulting from strong gusts of wind. In the event of a sudden gust of wind, blades of this design are restricted to the vertical orientation only, but the blade tips are unable to come into contact with the tower.

There exists a known invention FR2863318A1 dated June 10, 2005, characterized by a blade root that has a twist, whereby the long section of said blade is positioned angularly relative to the axis of the blade root passing through the straight section of said blade root, so as to reduce the aerodynamic disturbances occurring as a result of the aforementioned blades passing in front of the tower. Blade root is of single-piece design, therefore, the lever action (i.e. the blade, acting as a lever) occurs through a single fulcrum - the mounting of the blade and turbine hub, as shown on fig. 8, 9, 10, which is why the bend of said blade root exerts limited additional intensification effect on the blade rotation, and, correspondingly, the turbine power output.

There exists an invention WO 2008/064678 A2, known in the prior art, which represents a wind turbine blade comprising an assembly face for mounting in the circular pitch bearing, the axis of which is angled relative to the longitudinal axis of the blade, allowing for an elliptic crossing of the main axis, to the effect that the distance between the outermost part of the blade and the tower is increased when the leading edge of the blade is pitched up in the wind direction.

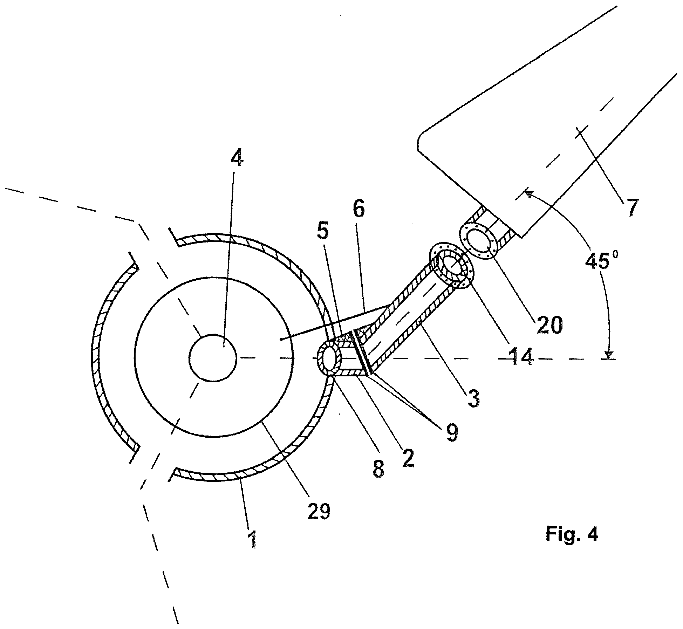

In the corresponding patent WO 2008/064678 A2, the turn of the pitch bearing changes two angles (fig. 7a, 7b): the angle 404 of the blade rotating on its own axis (fig 4. 8) and the angle at which the blade is drawn away from the tower (not shown in figures). This is due to the structure of the pitch bearing and, correspondingly, the spatial orientation of the blade. It is evident that if the 404 angle equals 0, the angle between the tower and the blade shall also equal to zero. If twist and pitch are positioned laterally relative to the primary axis of the main shaft, then the long blade may become parallel to the tower, thereby creating a risk of the blade colliding with the tower in the event of a strong wind current (fig. 11 from WO 2008/064678 A2).

A shortcoming of this invention consists in the unreliability of the mounting of the short part with the long part of the blade, as well as the complexity of the mechanisms that control the positions of all three blades while maintaining the pitch of the long blade and simultaneous rotation on its own axis. The principle can successfully function if the short section of the blade is of a certain limited length; however, in case of any considerable increase in length of the short section of the blade, the blade's total mass (which may run up to 2-7 tons in medium and high power wind turbines) and the wind's velocity can contribute to the deterioration of the mountings of all mechanisms, which leads one to conclude that the industrial feasibility of the invention may be limited.

The task of this invention is to create a design structure of a wind wheel (rotor) that efficiently transforms kinetic energy of the wind stream with a wind capture coefficient exceeding the 16/27 Betz coefficient (Yanson, 2007, Wind turbines, Bauman Moscow State Technical University).

Technical result of the invention is amplification of efficiency coefficient of using open airflow due to special design structure of the wind wheel, as well as achieving a considerable reduction in material consumption and weight of a wind turbine.

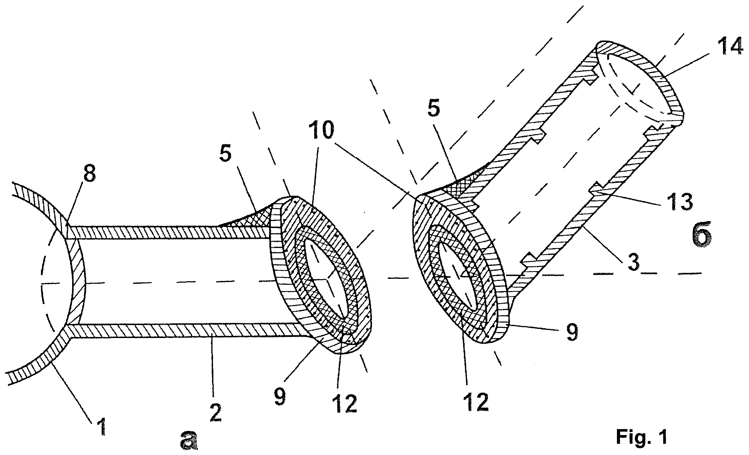

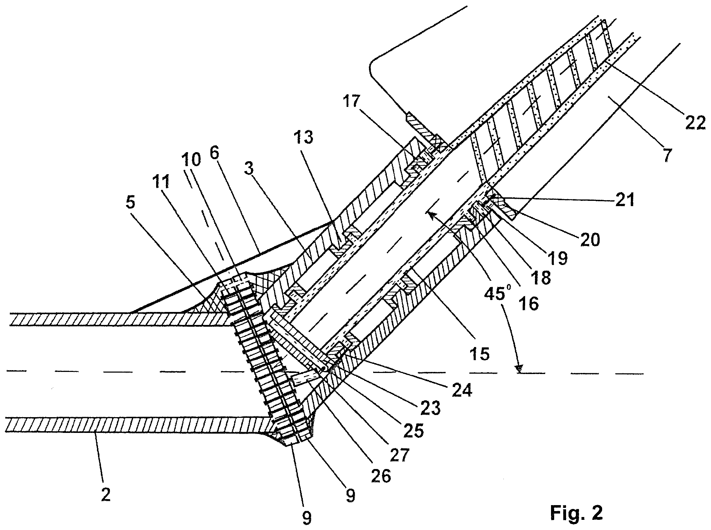

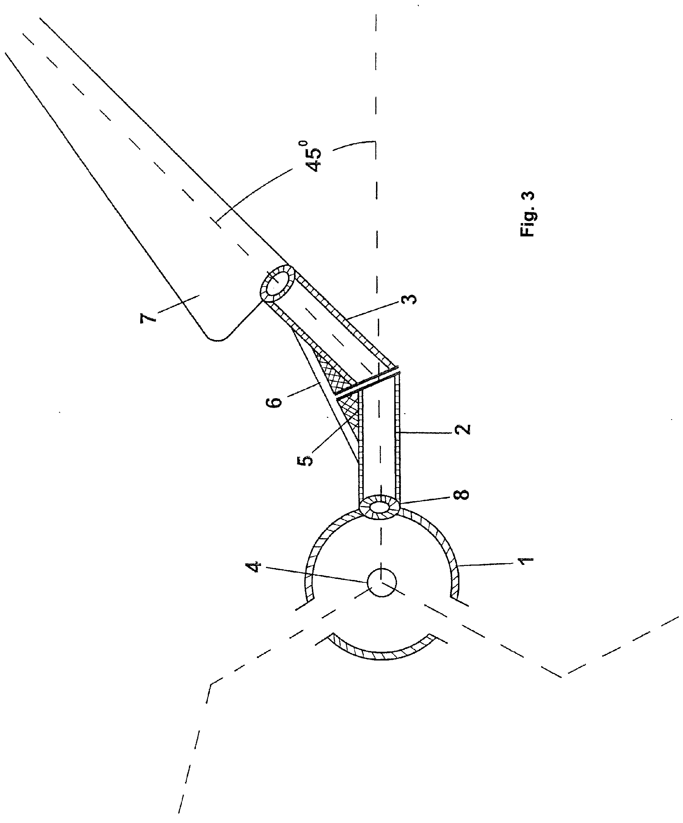

This is achieved with a blade in a form of an ice-hockey stick (Fig.3) in the new wind wheel (rotor) design structure in order to use the free wind flow effectively, instead of a traditionally applied blade on a straight axle mounted to the turbine hub perpendicular to the horizontal main drive shaft. In the invented rotor design structure, the blade consists of two parts: a short root part with an elbow bend (Fig. 1a, 1b, Fig.3, Fig.4) and a long wing part (Fig.3.7, Fig.4.7.). Said elbow bend has an angle of 30- 45° relative to the primary axis and contrary to the rotation of the blades (Fig.3, Fig.4). Said elbow bend on said short root part (Fig.2, Fig.3, Fig.4) divides it into axial section (Fig.1a, Fig. 3.2, Fig. 4.2), which is tightly mounted to the hub (Fig.3.8, Fig.4.8) connected with the main drive shaft (Fig.3.4, Fig.4.4) and the sleeve section (Fig.1b, Fig.3.3, Fig.4.3), which is connected with said long wing part (Fig.3.7, Fig.4.7).

Defining the bend angle on the short root part at the junction of axial and sleeve sections at 30-45⁰ angle is based on optimality of creating strong resistance to the wind stream on the surface of the blade whereas achieving more power from the double lever design structure of the wind wheel, and securing of the sturdiness at the junction of said elbow bend. Securing sturdiness at less than 30° bend angle is technically problematic, as blade's gravity force increases pressure on said elbow bend, amplified by torque moment of aerodynamic wind load and influence of torsional forces from cross wind on the long wing part of the blade. Defining said blade bend angle at more than 45° amplifies the resistance to the wind flow, creating additional aerodynamic load and reducing the effectiveness of the double-lever design structure of the wind wheel.

Industrially manufacturing a one-piece short elbow-bent part of the blade is complicated for technological reasons. That is why axial and sleeve sections of the short root part of the blade are produced separately from high-quality steel. Their design structure is universal for various wind wheel (rotor) types.

Dimensions and length of axial and sleeve sections of short root part depend on application principles and planned capacity of a particular wind turbine. With the purpose of maximizing productive efficiency from structural features of lever-type blades with two fulcrums and two points of effort application, we are suggesting two design structures of a wind wheel (rotor).

In "Wind wheel 1" the axial section of the short root part is 1.5-4.5-m long (1/10-1/20 of the blade length), its end is mounted to the hub of the wind turbine (Fig.3.8, Fig. 4.8), which is installed on the central drum (Fig 4.29). Whereas robust blade structure and sturdy connection of axial, sleeve and long wing parts is secured, said long wing part despite quite limited length, generates strong mechanical force. Given designed length of the blades, optimized for specified capacity of modern wind turbines, application of proposed wind wheel (rotor) design structure is capable of significantly increasing the capacity of the wind turbines.

In places with strong natural wind, it is possible to use "Wind wheel 2", where said axial section of the short root part (Fig. 4.2) is located only 20-25 cm away from the hub, which allows mounting axial section to the hub. There is a path through for maintenance personnel (Fig. 4.29) inside the hub (Fig. 4.28). Whenever a shorter axial section is chosen, tightening wires are used to connect the central drum of the hub with the sleeve section of the blade. Along with that, the hub of the wind turbine can be equal to nacelle width or a little wider, which does not impact the aerodynamic load on the turbine.

Fundamental differences of our rotor blade design structure, its form, parts and connection schemes are depicted on the following pictures.
Fig.1 depicts schematic structure of axial section (Fig. 1a) and sleeve section (Fig.1b) of the short root part of the blade;
Fig. 2 depicts said axial and sleeve sections of the short part of the blade, the connection scheme of the cylinder shaft on the long wing part with said sleeve section of short root part of the blade;
Fig. 3 depicts a scheme of an assembled wind wheel blade, where said axial section is 1.5-4.5 m long (Wind wheel 1);
Fig. 4 depicts a scheme of an assembled wind wheel blade, where the length of the axial section is 20-25 cm long (Wind wheel 2);
Fig. 5 depicts transverse tail fin at the blade tip.

Parts of axial (Fig.1a) and sleeve sections (Fig.1b) of the short root part of the blade are the following: the hub of the turbine 1 connected to the main drive shaft of the turbine 4, cylinder carcass of axial section of the short root part of the blade 2, inside wall of axial and sleeve sections 12, high edges of the flange on axial and sleeve sections 9, additional steel reinforcement of the edges and elbow bend 5, holes on flange 10 for connection of axial and sleeve sections with bolts, cylinder carcass of sleeve section 3, bearing rings 13,flange of the sleeve section 14 for connection with the long wing part of the blade, and junction of the axial section 8 with the hub of the wind turbine.

One end of said axial section has a form of a hollow cylinder (Fig.1a), and is connected with bolts to the wind turbine hub 8. The other end of said axial section from the side of said elbow bend in in the form of an ellipse, skewed along the line ½ of the arc between the centers of axial and sleeve sections, intersecting their crossing point. Created angle is turned inside from the direction of rotation (Fig. 1a). The edges of the flange on entire perimeter of said cylinder form are raised high 9 to connect both sections of the short root part of the blade. Said high edges of the flange and elbow bend have an additional steel reinforcement 5. Flank and reverse sides on the edges have a sloping border lining transition of the cylinder wall. A required number of holes are drilled along the flange perimeter 10 for bolted connection with the axial section.

The sleeve section can be slightly shorter than the axial part or equal to it. Said sleeve section has a cylindrical hollow carcass (Fig. 1b), and its structure is almost the same as the structure of said axial section. The difference of the sleeve section is in the presence of three bearing rings (Fig. 1.13; Fig. 2.13), which are needed for installation of bearings (Fig.2.17), cogs for mounting cylinder shaft (Fig. 2.16) and mounting flange of the cylinder shaft (Fig 2.18) for sturdy connection of the parts. For convenience of installation, said mounting flange consists of two halves. The end of said sleeve section, which is to be connected with said axial section, is a skewed flange, its slope is directed towards the outer end of said sleeve section. The elliptic flange has high edges (Fig. 1 b.9), and is reinforced by additional steel piece 5. Flank and reverse sides of said edges have a sloping border lining transition of the cylinder wall. A required number of holes are drilled along said flange perimeter for bolted connection with said axial section 10.

Fig. 2 depicts a connection of said axial and sleeve sections of the short root part of the blade, and a possible way of their connection with the shaft of the long wing part of the blade according to the following sequence: carcasses of axial 2 and sleeve sections 3, edges of the flange in both sections 9, additional steel reinforcement 5 on said edges and said bend, bolts 11 connecting two sections, steel wire 6 tightening said axial and sleeve sections, cylindrical carcass 3 of the sleeve section, bearing rings 13, bearings 17, cylindrical shaft 15 of said long wing part of the blade 7, cogs 16, flange 18, end bearing of the cylinder shaft 19, reinforcement of long wing part of the blade end 20, tightening bolts 21 for connection of said end of the cylinder shaft with the end of said long wing part, carcass of said long wing part of the blade 7, hold-down beam of said long wing part of the blade 22 made of fiberglass with composite materials, butt locking disc 23, eccentric 25, retaining nut 27, hydraulic pitch mechanism 26 for positioning said long wing part of the blade, bolts 24 for mounting said butt locking disc to the cogs.

In order to connect said long wing part with said sleeve section of short root part, a hollow steel cylinder shaft is manufactured (Fig. 2.15), end of which is fastened with bolts 21 or welded to the reinforced end of said long wing part 20. Said shaft contains ring cogs 16, for fastening said short sleeve section 13, through bearings 17 and flange 18. Said butt locking disc 23 is inserted into said end of the shaft, which is then fconnected by bolts 24 to said supporting cogs of said sleeve section. Said shaft then develops into octagonal facet and ends with a spiral thread for fastening the entire long wing part to said short root part with a retaining nut 27. Said octagonal faceted part of the shaft serves for fastening of said hydraulic pitch mechanism 26 (JP4104037, F03D 7/00 18.06.08 or according to another invention) through a ring eccentric 25, securing a pitch of said long wing part the blade along its axle and its positioning under different wind velocities. The upper end of the cylinder shaft has a supporting widened end bearing 19, through which said shaft is connected to said reinforced end of said long wing part 20 with the help of mounting bolts 21 (US Patent 4,412,784 dated 01.11.1983, FRG invention; DE 197 33 372 C1 F03D 1/06, 07.01.1999). Said hollow long wing part of the blade 7 has a hold-down beam 22 inside made of aluminum alloy of fiberglass with composite materials.

There is a concern due to the presence of a bend in the blade regarding the robustness of said elbow bend due to torsional effect of wind, especially, when the wind load increases. In the new wind wheel structure, the aerodynamic wind load on said long wing part of the blade is applied in the place of said elbow bend. Along with that said short root part and elbow bend are loaded in two directions. The first load follows vertical direction of blade's gravity force, amplified by torsion moment of aerodynamic wind load; and the second load is influence of torsional effects caused by cross wind on said long wing part of the blade. These effects are more obvious when the blades are longer.

Technical robustness of the blade and solution of "fracture" problem of said elbow bend due to gravity and resistance forces of the wind stream attacking said long wing part of the blade is solved by applying additional steel reinforcement (Fig. 1.5; Fig. 2. 5) on bending part of said axial and sleeve sections. Additionally, said sections are tightened with steel wire 6 (Fig. 2; Fig 3; Fig 4) in order to reduce the load on said bend at the junction of said axial and sleeve sections of the short root part. Using steel wire is a strengthening solution against the stretching force arising on an account of blade's weight and wind load, and in "Wind wheel 2" with 20-25 cm long axial section, said steel wire is tightened between the sleeve section and the central drum 29 (Fig. 4). The use of steel wire is a proven method for construction of suspension bridges. Said steel reinforcement on the edges of said axial and sleeve sections of short root part secures from breakage in case of torsional effects from front wind.

A key moment in wind energy power generation is increasing the capture coefficient of kinetic energy in open air flow. In order to achieve significant density of the wind flow on the surface of said long wing part of the blade, and in order to provide high aerodynamic effect of the wind flow within the limits of the swept area, capturing larger air mass is more advantageous, and results in greater wind density along the entire blade length.

Positioning said long wing part of the blade at 30-45° angle relative to said axial section of the blade already creates resistance to the wind flow. A defining feature of invented blade design structure is based on an application of a lever principle with two fulcrums and two points of effort application on one side, and designed, particularly, for creation of high-density wind stream and its easy overcoming.

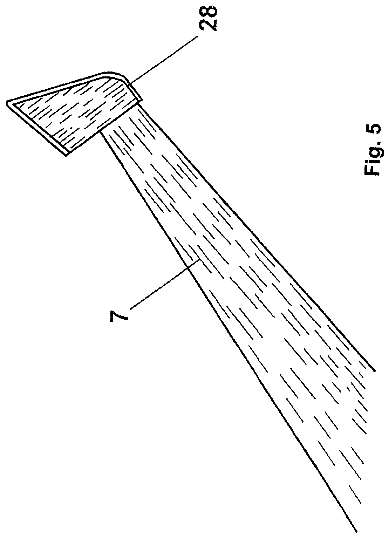

As an alternative option to the invented design structure, there is an additional part in a form of a fin (Fig. 5.28) installed transversely to the blade surface on blade tip 7. The height of the fin is 45-50 cm, which presents a significant obstacle for wind flow breakdown from trailing edge. Said fin has a form of a triangle, lower from upwind (20-25 cm high), higher and slightly longer by 20-25 cm in the rear end. Along with that said fin base extends beyond the blade's edge. Said restrictive fin on said blade tip amplifies the load on pitch mechanisms of a wind turbine, and subsequently, improves wind energy generation capacity.

The application of our wind wheel design structure provides additional force effect which is larger than that achieved by the blades with straight axial connection. Along with that, there is increase of in pitch and torsion of wind passing through the blade-swept area, which creates advantages of using more powerful energy generators, shortening the blade's length, and reducing the weight of nacelle and tower. This allows increasing annual electricity generation per unit of swept area, and decreasing the net cost of kilowatt-hours for materials used and installation works performed.

### List of References

Hub of the turbine- 1;
Axial section of the short root part of the blade- 2;
Sleeve section of the short root part of the blade - 3;
Main drive shaft - 4;
Additional steel reinforcement on the edges - 5;
Tightening steel wire - 6;
Long wing part of the blade - 7;
Junction of the axial section and the hub - 8;
Edges of the flange on axial and sleeve sections- 9;
Holes on the flange - 10;
Bolts for flanged connection- 11;
Inside wall of axial and sleeve sections - 12;
Bearing rings of the sleeve section- 13;
Flange of the sleeve section - 14;
Cylinder form shaft of the longwing part of the blade - 15;
Cogs for mounting cylinder shaft - 16;
Bearings - 17;
Flange of the cylinder shaft- 18;
End bearing of the cylinder shaft - 19;
Reinforcement end of long wing part - 20;
Tightening bolts for connection of the end bearing of the cylinder shaft with the end of the long wing part- 21;
Hold-down beam of the long wing part of the blade - 22;
Butt locking disc - 23;
Bolts for mounting butt locking disc to the cogs - 24;
Eccentric - 25
Hydraulic pitch mechanism of the long wing part of the blade - 26
Retaining nut - 27
Central drum of the hub- 28
Path through for personnel - 29
Transverse tail fin at the blade tip- 30

## Claims

1. Wind wheel, comprising a main drive shaft (4), a wind turbine hub (1) and blades each comprising two parts: a short root part (2, 3) with a device for connection and mounting of a circular bearing and a long wing part (7), ***characterized in that*** each blade comprises two parts: a short root part of the blade with an axial (2) and sleeve (3) sections, manufactured from steel, and a long wing part of the blade, manufactured from fiber glass; said short root part of the blade has an elbow bend located at the junction of said axial and sleeve sections at a distance of 1.5 - 4.5 meters or 20-25 cm from the mounting of said short root part of the blade to the hub whereas said elbow bend is disposed at a 30-45° angle contrary to the rotation of said wind wheel; said sleeve section has a cylindrical carcass that includes three bearing rings (13), connecting with said long wing part of the blade, which at its end contains a hollow steel cylindrical shaft with three cogs (16) for mounting of hinges; said cylindrical shaft (15) is connected to said long wing part of the blade by tightening bolts (21); said sleeve section of the blade contains hydraulic pitch mechanisms (26), connected with the end of said cylindrical shaft of said long wing part of the blade by means of eccentrics (25), ensuring pitch of the blade along its axis.

2. Wind wheel, according to claim 1, ***characterized in that*** there is additional steel reinforcement at the junction of said axial and sleeve sections; and both said sections of short root part are tied together by steel wires.

3. Wind wheel, according to claim 1, ***characterized in that*** there is additional steel reinforcement at the junction of said axial and sleeve sections, and steel wires supporting said elbow bend are tied between the central drum of said hub and said sleeve section of short root part of the blade.

4. Wind wheel, according to claim 1, ***characterized in that*** said short root part with said elbow bend comprises a lever with two beams and two fulcrums, positioned on one side and designed to efficiently harness a high density of the wind stream passing through said long wing part of the blade.

## Patentansprüche

1. Windrad, umfassend eine Hauptantriebswelle (4), eine Windturbinennabe (1) und Windturbinenschaufeln, deren jede zwei Teile hat: einen kurzen Fußteil (2, 3) mit einer Vorrichtung zum Verbinden und Montieren eines kreisförmigen Lagers und einen langen Flügelteil (7), ***dadurch gekennzeichnet,* dass** jede Schaufel zwei Teile hat: einen kurzen Fußteil der Schaufel mit einem axialen (2) und einem Hülsenabschnitt (3) aus Stahl und einen langen Flügelteil der Schaufel aus Glasfasern; wobei der kurze Fußteil der Schaufel an der Verbindungsstelle des axialen und des Hülsenabschnitts eine Krümmung in einem Abstand von 1,5 - 4, 5 Meter oder 20 - 25 cm von der Befestigung des kurzen Fußteils der Schaufel von der Nabe aufweist, während die Krümmung in einem Winkel von 30-45° entgegengesetzt zur Drehung des Windrads angeordnet ist; wobei der Hülsenabschnitt einen zylinderförmigen Rumpf mit drei Lagerringen (13) hat, zum Verbinden mit dem langen Flügelteil der Schaufel, der an seinem Ende eine hohlzylindrische Welle mit drei Zähnen (16) zum Montieren von Scharnieren enthält; wobei die zylindrische Welle (15) mit dem langen Flügelteil der Schaufel durch Festdrehen von Schrauben (21) verbunden ist, wobei der Hülsenabschnitt der Schaufel einen hydraulischen Anstellmechanismus (26) aufweist, der mittels Exzentern (25) mit dem Ende der zylindrischen Welle des langen Flügelteils der Schaufel verbunden ist und eine Anstellung der Schaufel entlang ihrer Achse sicherstellt.

2. Windrad nach Anspruch 1, ***dadurch gekennzeichnet,* dass** an der Verbindungsstelle des axialen und des Hülsenabschnitts eine zusätzliche Stahlverstärkung vorgesehen ist und dass beide Abschnitte des kurzen Fußteils durch Stahldrähte miteinander verbunden sind.

3. Windrad nach Anspruch 1, ***dadurch gekennzeichnet,* dass** an der Verbindungsstelle des axialen und des Hülsenabschnitts eine zusätzliche Stahlverstärkung vorgesehen ist und dass die Krümmung stützende Stahldrähte zwischen der zentralen Trommel der Nabe und dem Hülsenabschnitt des kurzen Fußteils der Schaufel eingebunden sind.

4. Windrad nach Anspruch 1, ***dadurch gekennzeichnet,* dass** der kurze Fußteil mit der Krümmung einen Hebel mit zwei Balken und zwei Stützpunkten hat, der auf einer Seite positioniert ist und ausgebildet ist zum effizienten Nutzen einer hohen Dichte der Windströmung durch den langen Flügelteil der Schaufel.

## Revendications

1. Roue éolienne, comprenant un arbre d'entraînement principal (4), un moyeu d'éolienne (1) et des pales comprenant chacune deux parties: une courte partie de base (2, 3) munie d'un dispositif pour la connexion et le montage d'un palier circulaire, et une partie d'aile longue (7), ***caractérisée en ce* que** chaque pale comprend deux parties: une courte partie de base de la pale avec une section axiale (2) et une section de manchon (3) fabriquées à partir d'acier, et une partie d'aile longue fabriquée de fibre de verre; ladite courte partie de base de la pale ayant un coude plié situé à la jonction desdites sections axiale et de manchon á une distance de 1,5 - 4,5 mètres ou 20 - 25 cm de la positon de montage de ladite courte partie de base de la pale au moyeu alors que le coude plié est disposé à un angle de 30-34° à l'opposé de la rotation de la roue éolienne; ladite section de manchon ayant une carcasse cylindrique incluant trois bagues de palier (13) connectant à ladite partie d'aile longue comportant à son extrémité un arbre cylindrique creux en acier muni de trois dents (16) pour monter des charnières; ledit arbre cylindrique (15) étant connecté la partie d'aile longue de la pale par serrage des boulons (21); ladite section de manchon de la pale contentant un mécanisme de pas hydraulique (26) connecté à l'extrémité dudit arbre cylindrique de la partie d'aile longue de la pale au moyen des excentriques (25) assurant le pas de la pale le long de son axe.

2. Roue éolienne selon la revendication 1, ***caractérisée en ce* qu'**il y a un renforcement en acier additionnel à la jonction desdites sections axiale et de manchon; et que les deux sections de la courte partie de base sont attachées ensemble avec des fils d'acier.

3. Roue éolienne selon la revendication 1, ***caractérisée en ce* qu'**il y a un renforcement en acier additionnel à la jonction desdites sections axial et de manchon et que des fils d'acier supportant ledit coude plié sont attachés entre le tambour central du moyeu et ladite section de manchon de la courte partie de base de la pale.

4. Roue éolienne selon la revendication 1, ***caractérisé en ce* que** la partie courte de base comportant ladite coude plié comprend un levier avec deux traverses et deux points d'appui positionné d'un côté et destiné à exploiter de manière efficace une haute densité du courant d'air passant à travers de la partie d'aile longue de la pale.
